# EUROPÄISCHE PATENTSCHRIFT

(11) **EP 0 942 483 B1**
(45) Veröffentlichungstag und Bekanntmachung des Hinweises auf die Patenterteilung: **22.01.2003**
(21) Anmeldenummer: 99103459.6
(22) Anmeldetag: 23.02.1999
(51) Int. Cl.: H01M 8/02

(54) **Brennstoffzelle mit eingebautem Spannungswandler**
Fuel cell with built-in voltage converter
Pile à combustible comportant un convertisseur de tension

(30) Priorität: 11.03.1998 DE 19810556
(43) Veröffentlichungstag der Anmeldung: 15.09.1999
(73) Patentinhaber: Fraunhofer-Gesellschaft zur Förderung der angewandten Forschung e.V., 80636 München (DE)
(72) Erfinder: Meyer, Tim, Dipl.-Ing., 79106 Freiburg (DE); Nolte, Roland, Dr., 79211 Denzlingen (DE); Schmidt, Heribert, Dr., 79312 Emmendingen (DE); Heinzel, Angelika, 79224 Umkirch (DE)
(74) Vertreter: Pfenning, Meinig & Partner GbR

(56) Entgegenhaltungen:
- PATENT ABSTRACTS OF JAPAN vol. 018, no. 551 (E-1619), 20. Oktober 1994 (1994-10-20) -& JP 06 197553 A (TOKYO GAS CO LTD), 15. Juli 1994 (1994-07-15)
- PATENT ABSTRACTS OF JAPAN vol. 008, no. 073 (M-287), 5. April 1984 (1984-04-05) -& JP 58 218802 A (NISSAN JIDOSHA KK), 20. Dezember 1983 (1983-12-20)

## Beschreibung

Die Erfindung betrifft Brennstoffzellen mit elektrischem Spannungswandler, der in solche Brennstoffzellen integrierbar sein soll und bei denen Gleichspannungswandler oder Wandler für die Wandlung der Gleichspannung, die von den Brennstoffzellen zur Verfügung gestellt wird, in eine Wechselspannung erfolgt, eingesetzt werden können.

Bekanntermaßen kann mit Brennstoffzellen chemische Energie direkt in elektrische Energie mit relativ hohem Wirkungsgrad umgewandelt werden. Hierfür werden ionenleitende Elektrolyten beidseitig mit Elektrodenmaterial, z.B. Katalysatoren kontaktiert und auf beiden Seiten einer solchen Einheit die für die Brennstoffzelle zu verwendenden Reaktanden, z.B. Wasserstoff oder Methanol und Sauerstoff oder Sauerstoff enthaltende Luft zugeführt und die infolge der Reaktion entstehende elektrische Potentialdifferenz kann an beiden Seiten der Elektrolyt/Elektrodeneinheit gegebenenfalls über gesonderte Elektroden abgegriffen werden.

Bekannte Brennstoffzellenprinzipien sind die alkalischen Brennstoffzellen (AFC), die Membranbrennstoffzellen (PEMFC), die Phosphorsäure als Elektrolyt verwendenden Brennstoffzellen (PAFC), die Karbonatschmelzen-Brennstoffzellen (MCFC) und die oxidkeramischen Brennstoffzellen (SOFC).

Bei allen diesen verschiedenen Brennstoffzellentypen kann zwar eine theoretische Leerlaufspannung von ca. 1,23 V abgegriffen werden, wobei praktisch real lediglich etwa 1 V erreichbar ist. Unter Lastbedingungen können Spannungen im Bereich zwischen 0,5 bis 0,7 V erreicht werden. Dieses Spannungsniveau ist in der Regel für die meisten praktischen Anwendungen unzureichend, so daß die Brennstoffzellen dahingehend fortgebildet wurden, daß durch Reihenschaltungen mehrerer Einzelbrennstoffzellen, wie dies beispielsweise in US 4,175,165 beschrieben worden ist, die erreichbare Spannung erhöht werden konnte.

Aus DE 43 29 819 ist die Streifenmembrantechnik bekannt, bei der ebenfalls durch Reihenschaltung die Spannung erhöht werden konnte.

Aus der JP 06 197553 A ist eine in einem Brennstoffzellen block integrierte Anordnung zur Spannungswandlung bekannt.

Mit der zusätzlichen Kombination einer Brennstoffzelle mit Spannungswandlern ist ein weiterer gangbarer Weg beschritten worden. Möglich Spannungswandler kann man beispielsweise W. Hascher in "Power in mini-format: die Zukunft der System-Stromversorgung gehört dem dezentralen DC/DC-Wandler" in Elektronik 15/1997, Seiten 96 bis 99 entnehmen. Mit solchen bekannten Wandlern können niedrige Ausgangsspannungen für viele praktische Anwendungen in relevante Größenordnungen umgewandelt werden. Dabei können nicht nur Gleichspannungs-/Gleichspannungswandler, sondern auch Gleichspannungs-/Wechselspannungswandler verwendet werden. Selbstverständlich wird die Auswahl eines solchen Spannungswandlers, dem Bedarf der jeweiligen Applikation entsprechend erfolgen, so daß im weiteren der Begriff Spannungswandler immer beide Alternativen umfaßt.

Sollen nun Brennstoffzellen in Kombination mit Spannungswandlern verwendet werden, so wird normalerweise der Spannungswandler über elektrische Leitungen mit den beiden elektrischen Brennstoffzellenausgängen verbunden und die erhöhte Spannung kann am Spannungswandler und dort an dessen Ausgängen abgegriffen werden. Werden Brennstoffzellen und Spannungswandler als Einzelkomponenten verwendet, treten mehrere Nachteile auf. So wird ein verhältnismäßig großes Volumen für die beiden separaten Komponenten benötigt, um alle Einzelteile und die erforderlichen Verbindungen unterzubringen.

Ein weiterer wesentlicher Nachteil besteht darin, daß beim Einsatz von Brennstoffzellen relativ hohe Stromstärken zu berücksichtigen sind. Es ist beispielsweise mit einer Zelle, die eine aktive Zellfläche von 200 cm² aufweist, eine Stromdichte von 1 A/cm² erreichbar und demzufolge muß eine Stromstärke von 200 A über die Verbindung von Brennstoffzelle zum Spannungswandler geführt werden, so daß sehr dicke, teure und unhandliche Verbindungsleitungen erforderlich sind.

Es ist daher Aufgabe der Erfindung, sehr kompakt aufgebaute Brennstoffzellen zur Verfügung zu stellen, die eine erhöhte Ausgangsspannung zur Verfügung stellen.

Erfindungsgemäß wird diese Aufgabe mit den Merkmalen des Patentanspruchs 1 gelöst. Vorteilhafte Ausgestaltungsformen und Weiterbildungen der Erfindung ergeben sich bei der Verwendung der in den untergeordneten Ansprüchen enthaltenen Merkmale.

Bei der erfindungsgemäßen Lösung ist es wesentlich, daß der entsprechend zu verwendende Spannungswandler in die eigentliche Brennstoffzelle integriert ist, wobei der Spannungswandler zwischen Endplatten angeordnet ist, die gleichzeitig Gehäusefunktion übernehmen können. Mit einer solchen Anordnung kann eine verlustarme Übertragung der Elektroenergie von der Brennstoffzelle zum Spannungswandler erfolgen, wobei eine gegenüber der Verwendung von Einzelkomponenten stark verringerte Baugröße erreichbar ist.

Die Erfindung kann aber auch bei einer Stapelanordnung mehrerer in Reihe angeordneter Brennstoffzellen, an deren Außenseiten wieder solche entsprechend ausgebildeten Endplatten angeordnet sind, eingesetzt werden, wobei hier die Spannungswandlung von einem entsprechend höheren Ausgangsniveau erfolgen kann.

Nachfolgend soll die Erfindung an Ausführungsbeispielen näher beschrieben werden.

Dabei zeigen:
- Figur 1: ein Beispiel einer herkömmlichen Brennstoffzelle mit separat angeordnetem Spannungswandler;
- Figur 2: ein erstes Beispiel einer erfindungsgemäßen Brennstoffzelle;
- Figur 3: eine Seitenansicht einer Endplatte, die bei einer Brennstoffzelle nach Figur 2 verwendet werden kann;
- Figur 4: die andere Seite der Endplatte 56 nach Figur 3;
- Figur 5: ein zweites Beispiel einer erfindungsgemäßen Brennstoffzelle;
- Figur 6: eine Endplatte, die in einer Brennstoffzelle nach Figur 5 mit einer zusätzlichen Kontaktplatte 55 verwendet werden kann, in einer Seitenansicht;
- Figur 7: die andere Seite der Endplatte nach Figur 6;
- Figur 8: ein drittes Beispiel einer erfindungsgemäßen Brennstoffzelle in zwei Ansichten;
- Figur 9: ein viertes Beispiel einer erfindungsgemäßen Brennstoffzelle in zwei Ansichten;
- Figur 10: ein fünftes Beispiel einer erfindungsgemäßen Brennstoffzelle in zwei Ansichten;
- Figur 11: ein sechstes Beispiel einer erfindungsgemäBen Brennstoffzelle in zwei Ansichten;
- Figur 12: ein siebentes Beispiel einer erfindungsgemäßen Brennstoffzelle in Stapelanordnung in zwei Ansichten und
- Figur 13: ein achtes Beispiel einer erfindungsgemäßen Brennstoffzelle.

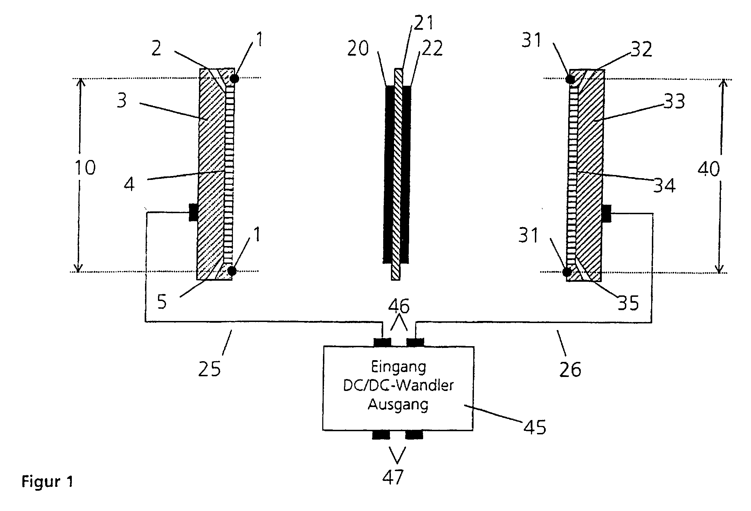

In der Fig. 1 ist der prinzipielle Aufbau einer herkömmlichen Einzelbrennstoffzelle schematisch dargestellt. Bei einer solchen Brennstoffzelle wird ein ionenleitender Elektrolyt 21, der an beiden Seiten von Elektroden 20 und 22 eingefaßt ist, verwendet. Diese Elektrolyt/Elektrodeneinheit wird wieder von zwei beidseitig angeordneten Endplatten 3 und 33 eingefaßt, die den eigentlichen Reaktionsraum mit Dichtungen 1 und 31 abschließen. Die Endplatten 3 und 33 sind aus einem elektrisch leitenden Material und außenseitig mit Elektroden kontaktiert, an denen die Ausgangsspannung der Brennstoffzelle abgreifbar ist, die über Leitungen 25 und 26 zu den Eingängen 46 eines Gleichspannungs-/Gleichspannungswandlers 45 geführt ist, der wieder Spannungsausgänge 47 aufweist. Der durch die Dichtungen 1 und 31 abgegrenzte Bereich 10 und 40 der Endplatten 3 und 33 liegt der jeweils aktiven Elektrode 20 bzw. 22 gegenüber. Außerdem sind die Zuführ- und Abführkanäle 2, 5, 32 und 35 für Brennstoff und Oxidationsmittel sowie die Abfuhr der Reaktionsprodukte durch die Endplatten 3 und 33 dargestellt, wobei die eigentliche Zuführung und Abführung über Verteilerstrukturen 4 und 34, die an den Innenflächen der Endplatten 3 und 33 angeordnet sind, erfolgt.

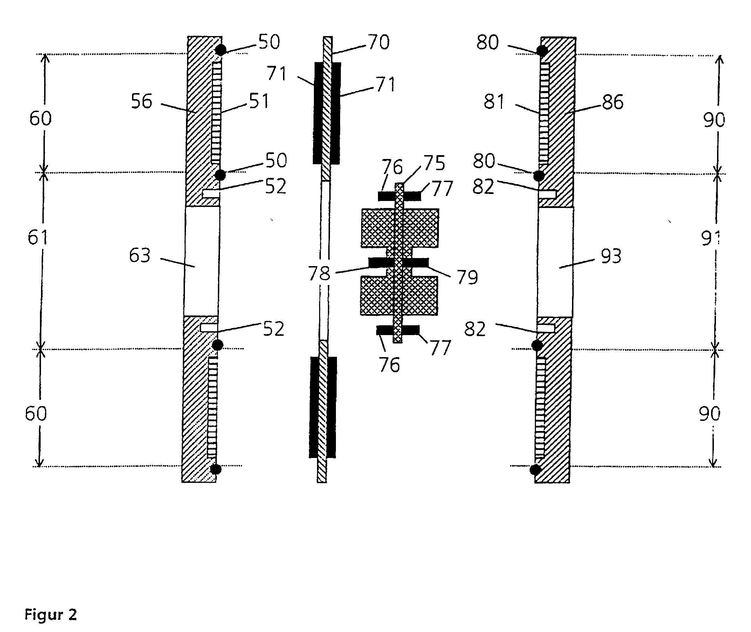

Bei dem in der Fig. 2 dargestellten ersten Beispiel einer erfindungsgemäßen Brennstoffzelle sind die außenseitig zur Elektrolyt/Elektrodeneinheit 70, 71 angeordneten Endplatten 56 und 86, wie auch die Elektrolyt/Elektrodeneinheit 70, 71 kreisringförmig ausgebildet, so daß in den Endplatten 56 und 86 Durchbrechungen 63 und 93 ausgebildet sind. Solche Endplatten können aus Metallen, wie z.B. Titan, Edelstahl, aus Kohlenstoff, wie z.B. Graphit oder polymergebundenem Graphit oder aus elektrisch leitfähigen Polymeren bestehen.

Desweiteren sind an den Endplatten 56 und 86 zwei verschiedene Bereiche 61, 91 und 60 und 90 ausgebildet, wobei der Bereich 61 bzw. 91 lediglich die elektrisch leitende Verbindung zu den Spannungseingängen 76 und 77 des Spannungswandlers 75 darstellt und der Bereich 60 bzw. 90 zwar mit dem ersten Bereich elektrisch leitend verbunden, jedoch auch eine direkte elektrische Anbindung zur Elektrolyt/Elektrodeneinheit 70, 71 und Kontakt mit den chemischen Reaktanden hat. Dabei erfolgt die Trennung der Bereiche unter verwendung von Dichtungen 50 und 80. Bei diesem Beispiel werden in den Endplatten 56 und 86 auch Verteilerstrukturen 51 und 81 über die die Zu- und Abführung der Reaktanden zur Elektrolyt/Elektrodeneinheit 70, 71 erfolgen kann, verwendet. In der Fig. 2 sind die Zu- und Abführungskanäle für die Reaktanden und Reaktionsprodukte nicht dargestellt, werden jedoch in herkömmlicher Form verwendet. Dies ist auch bei den nachfolgend zu beschreibenden Beispielen der Fall.

Im freien Bereich der kreisringförmigen Elektrolyt/Elektrodeneinheit 70, 71 kann der Spannungswandler 75 angeordnet sein. Im zusammengebauten Zustand der erfindungsgemäßen Brennstoffzelle mit Spannungswandler 75, nach diesem Beispiel, können die Spannungseingangskontakte 76 und 77 des Spannungswandlers 75 in entsprechend nuten- und ringförmige Einschnitte 52 und 82 form- und/oder kraftschlüssig, beispielsweise beim auch automatisch möglichen Zusammenbau der Brennstoffzelle eingesetzt und gehalten werden, wobei diese ähnlich wie Steckkontakte ausgebildet sind und wirken können. Auch die Eingänge 76 und 77 können kreisringförmig ausgebildet sein, so daß die relativ hohen Stromstärken, die bei einer entsprechend großen Brennstoffzelle erreicht werden können, problemlos auf den Spannungswandler 75 übertragen werden können.

Die mit dem Spannungswandler 75 erreichte erhöhte Spannung kann wieder an den Ausgangskontakten 78 und 79 des Spannungswandlers 75 abgegriffen werden, wobei ein direkter Zugriff durch die Durchbrechungen 63 und 93 in den Endplatten 56 und 86 möglich ist. Mögliche Spannungswandler 75 sind z.B. ein- und zweipulsige Durchflußwandler, Sperrwandler, Hochsetzsteller, Cuk-Wandler u.a.

Auch der eigentliche Spannungswandler 75 kann so geformt sein, daß er ohne weiteres in die Durchbrechungen 63 und 93 eingepaßt werden kann, um einen alleinigen formschlüssigen Halt zu erreichen. Selbstverständlich ist auch eine herkömmliche Klebeverbindung möglich. Die Endplatten 56 und 86 können aber auch unterschiedlich ausgebildet und lediglich in einer der Endplatten 56 oder 86 eine Durchbrechung 63 bzw. 93 ausgebildet sein, durch die die Ausgangsspannung des Spannungswandlers 75 abgegiffen werden kann.

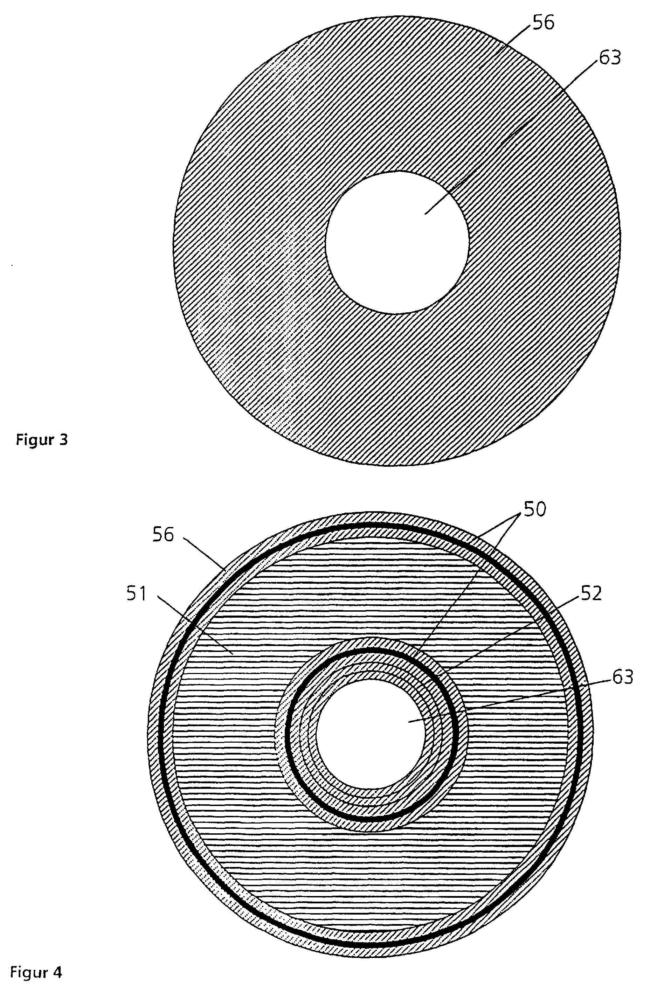

In den Fig. 3 und 4 ist die Endplatte 56 in beiden Seitenansichten dargestellt. Dabei ist insbesondere in der Fig. 4 deutlich erkennbar, daß der zweite Bereich durch die Dichtungen 50 vom ersten Bereich der Endplatte 56 isoliert gehalten werden kann und der erste Bereich innerhalb der inneren Dichtung 50 über den kreisring- und nutenförmigen Einschnitt 52 ausschließlich für die elektrisch leitende Verbindung zum hier nicht dargestellten Spannungswandler 75 verwendet wird. Der zweite Bereich, hier insbesondere durch die Verteilerstruktur 51 deutlich gemacht, steht innerhalb der beiden Dichtungsringe 50 mit den chemischen Reaktanden in direkter Verbindung und über den elektrisch leitenden Teil der Endplatte 56 kann die mit der Brennstoffzelle erzeugte elektrische Energie über den ersten Bereich zum hier nicht dargestellten Spannungswandler 75 übertragen werden.

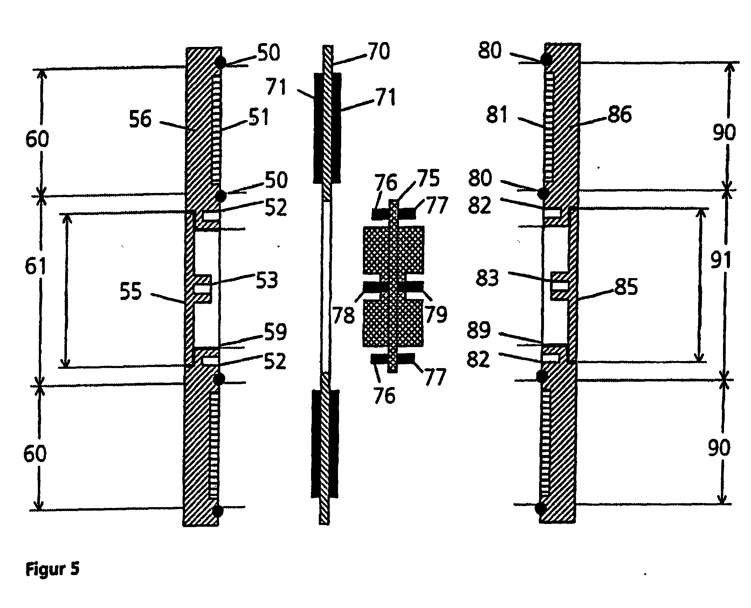

Das in der Fig. 5 gezeigte zweite Beispiel einer erfindungsgemäßen Brennstoffzelle mit Spannungswandler 75 entspricht im wesentlichen, dem bereits in den Fig. 2 bis 4 gezeigten und beschriebenen Beispiel.

.Es wurden lediglich zusätzliche Kontaktplatten 55 und 85 verwendet, die von außen in die jeweiligen Endplatten 56 und 86 eingesetzt worden sind. Dabei sind die Endplatten 56 und 86 durch Isolierungen 59 und 89 von den Kontaktplatten 55 und 85 elektrisch getrennt, so daß ein Kurzschluß vermieden werden kann, wenn die Spannungsausgangskontakte 78 und 79 des Spannungswandlers 75 mit den Kontaktplatten 55 und 85 elektrisch leitend verbunden werden. Hierfür sind in den Kontaktplatten 55 und 85 Sackloch ähnliche Aufnahmen 53 und 83 vorhanden, in die die Ausgangskontakte 78 und 79 des Spannungswandlers 75 eingepaßt werden können und eine kraft- und/oder formschlüssige, einem Steckverbinder ähnliche Verbindung von Spannungswandler 75 zu den Kontaktplatten 75 und 85 erreicht wird. Dabei kann die erhöhte Spannung an den Kontaktplatten 55 und 85 abgegriffen werden und eine so zusammengebaute Brennstoffzelle eine kompakte, abgeschlossene Einheit bilden.

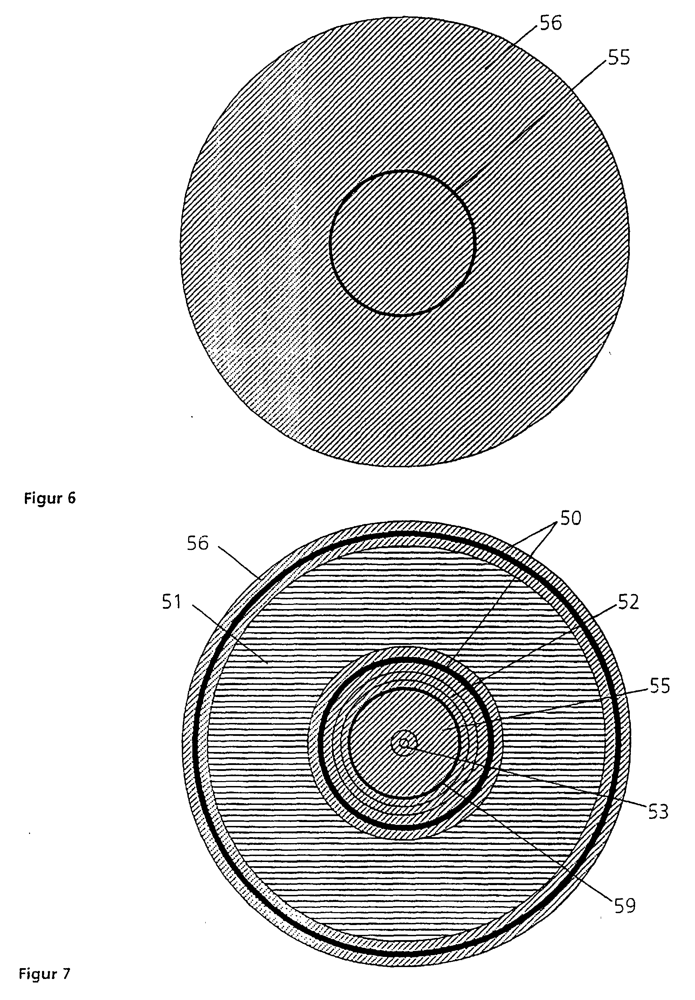

Die Fig. 6 und 7 zeigen wiederum die beiden Seitenansichten einer Endplatte 56 der Brennstoffzelle mit Spannungswandler nach Fig. 5.

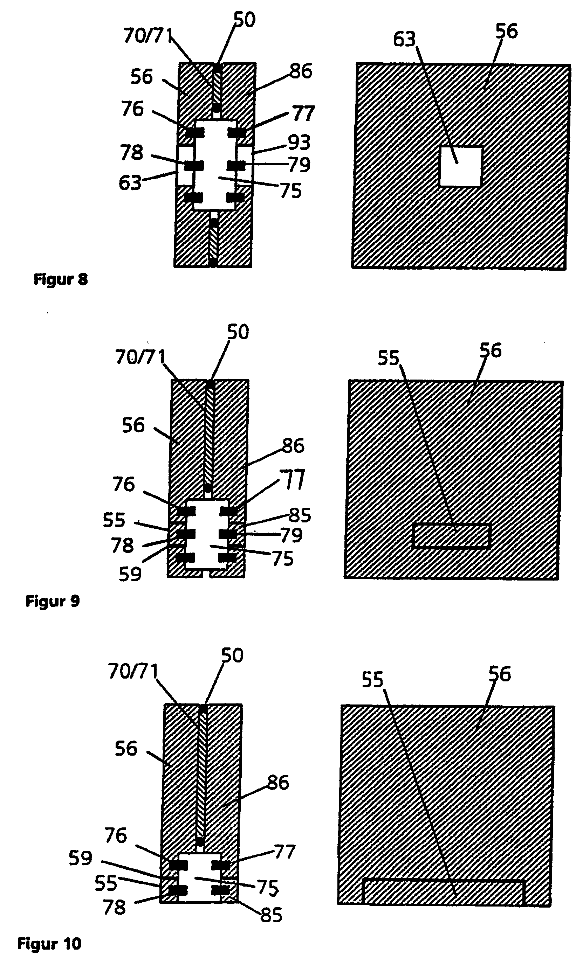

Neben den nahezu rotationssymmetrischen in den Fig. 2 bis 7 gezeigten Varianten für die Ausbildung einer erfindungsgemäßen Brennstoffzelle mit integriertem Spannungswandler 75 können auch andere Bauformen, wie sie in den Fig. 8 bis 13 dargestellt sind, verwendet werden.

Dabei zeigt die Fig. 8 ein drittes Beispiel einer erfindungsgemäßen Brennstoffzelle in quadratischer Ausbildung der Endplatten 56 und 86, bei der mittig auch hier quadratische Durchbrechungen 63 und 93 vorhanden sind. Im übrigen entspricht dieses Beispiel wieder dem in den Fig. 2 bis 4 dargestellten Beispiel, und der Abgriff der erhöhten Spannung des Spannungswandlers 75 kann durch die Durchbrechungen 63 und 93 direkt an den Spannungsausgangskontakten 78 und 79 des Spannungswandlers 75 erfolgen. Die Spannungseingangskontakte 76 und 77 sind hier nicht als Kreisringe, sondern ebenfalls als Quadrate um die Durchbrechungen 63 und 93 ausgebildet. Auch die Elektrolyt/Elektrodeneinheit 70, 71, die auch hier von Dichtungen 50 eingeschlossen ist, hat in der Seitenansicht eine entsprechend quadratische Form, in deren Inneren der Spannungswandler 75 angeordnet ist.

In der Fig. 9 ist ein viertes Beispiel einer erfindungsgemäßen Brennstoffzelle mit außermittiger Anordnung des Spannungswandlers 75 und Durchbrechungen 63 und 93 dargestellt, wobei in diese Durchbrechungen wieder Kontaktplatten 55 und 85 zu den Endplatten 56 und 86 elektrisch isoliert eingesetzt sind. Im Gegensatz zu dem in der Fig. 10 gezeigten Beispiel sind hier Spannungseingangskontakte 76 und 77 des Spannungswandlers 75 an beiden Seiten der Kontaktplatten 55 und 85 verwendet worden.

Bei dem in der Fig. 10 gezeigten fünften Beispiel sind der Spannungswandler 75 und die Durchbrechungen 55 und 85 randseitig als Einschnitt ausgebildet bzw. angeordnet, wobei auch hier wieder Kontaktplatten 55 und 85 elektrisch von den Endplatten 56 und 86 isoliert eingesetzt wurden.

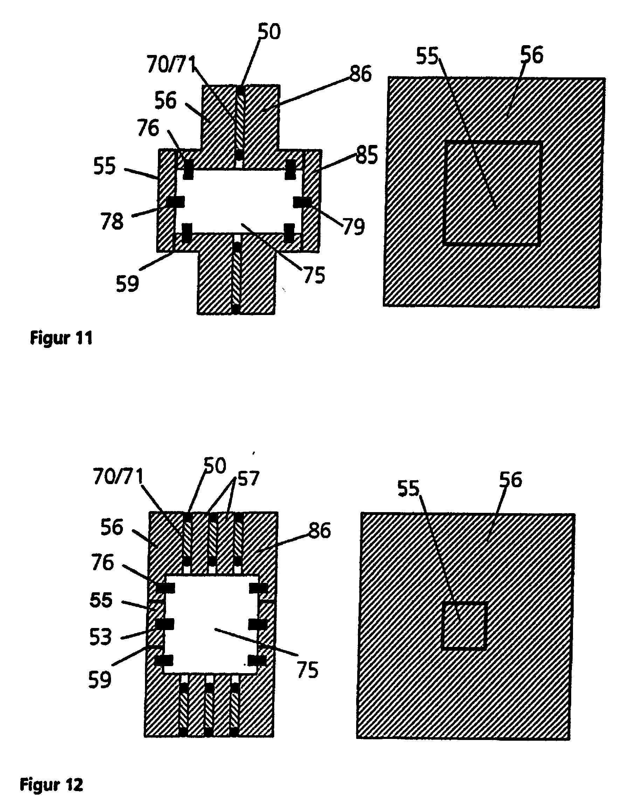

Das in der Fig. 11 gezeigte sechste Beispiel einer erfindungsgemäßen Brennstoffzelle verwendet keine ebenen Endplatten 56 und 86, sondern solche, die flanschartige Ansätze aufweisen, die mit aufgesetzten Kotaktplatten 55 und 85 in Richtung auf den Spannungswandler 75 verschlossen und mit den Ausgangskontakten 78 und 79 des Spannungswandlers verbunden sind.

Auch hier sind Kontaktplatten 55 und 85 von den Endplatten 56 und 86 mit dem Isoliermaterial 59 elektrisch isoliert.

Mögliche Materialien für sämtliche elektrischen Isolierungen sind nicht leitfähige Polymere, wie z.B.Polyethylene, Polysulfone, Polytetrafluorethylene, andere nicht leitfähige anorganische Materialien, wie z.B. Keramiken oder solche Gemische.

In der Fig. 12 ist ein siebentes Beispiel einer erfindungsgemäßen Einheit dargestellt, bei dem eine Stapelanordnung mehrerer Elektrolyt/Elektrodeneinheiten 70, 71 eine Reihenanordnung mehrerer Brennstoffzellen bilden, die eine Reihenschaltung darstellen und jeweils von leitfähigen bipolaren Platten 57 getrennt sind. Mögliche Materialien für solche leitfähigen, bipolaren Platten 57 sind z.B. Metalle, insbesondere Titan oder Edelstahl oder Graphit, polymergebundenem Graphit oder elektrisch leitfähige Polymere.

Durch diese Stapelanordnung kann die Eingangsspannung in den Spannungswandler 75 bereits erhöht werden, so daß die letztendlich mit dem Spannungswandler 75 erreichbare Endspannung bei Bedarf auf ein nochmals erhöhtes Endniveau transferiert werden kann. Die Ausgangsspannung des Spannungswandlers 75 kann wieder über Kontaktplatten 55, die bei diesem Beispiel wieder in der Mitte der Endplatten 56 und 86 angeordnet sind, abgenommen werden.

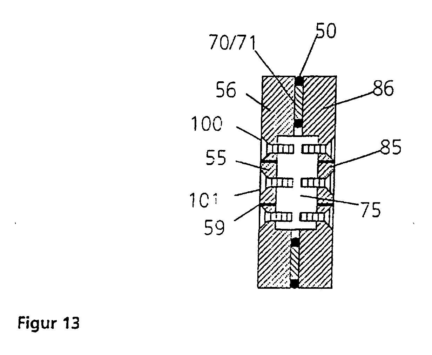

In der Fig. 13 ist ein achtes Beispiel einer erfindungsgemäßen Brennstoffzelle dargestellt, bei dem Schrauben 100 und 101 als Verbindungselemente und gleichzeitig Kontakte verwendet werden. Dabei wird die elektrisch leitende Verbindung vom ersten Bereich der Endplatten 56 und 86 zum Spannungswandler 75 über die Schrauben 100 hergestellt und die Schrauben 101 bilden die elektrische Verbindung von den Spannungsausgängen des Spannungswandlers 75 und können entweder direkt als Kontakte oder in Verbindung mit den Kontaktplatten 55 und 85 für den Spannungsabgriff der erhöhten Spannung verwendet werden.

Bei allen beschriebenen Beispielen der Erfindung kann das Zusammenfügen aller Teile und hierbei insbesondere das Zusammenfügen der leitfähigen Bereiche der Endplatten 56 und 86 mit den Isolationsschichten durch Verkleben, Verschweißen, Verschrauben, Einpressen oder Einstecken erreicht werden. Beim Einpressen bzw. Einstecken können nippel- oder nutenartige Elemente verwendet werden, die im zusammengesteckten Zustand einrasten und eine form- und kraftschlüssige Verbindung herstellen.

## Patentansprüche

1. Brennstoffzelle mit Spannungswandler,
**dadurch gekennzeichnet,**
**daß** der Spannungswandler (75), an dem die gewandelte Spannung abgreifbar ist, uber einen Eingangskontakt (76, 77) und Ausgangskontakt (78, 79), zwischen zwei elektrisch leitenden Endplatten (56, 86) angeordnet und mit diesen elektrisch leitend in jeweils einem ersten Bereich (61, 91) verbunden ist, und daß der erste Bereich (61, 91) von einem zweiten Bereich (60, 90) der Endplatten (56, 86), der eine direkte elektrische Anbindung zur Elektrolyt/Elektrodeneinheit (70, 71) aufweist und Kontakt zu den chemischen Reaktanden hat, lokal getrennt und elektr. leitend verbunden ist.

2. Brennstoffzelle nach Anspruch 1,
**dadurch gekennzeichnet, daß** die beiden Bereiche (61, 91) und (60, 90) der Endplatten (56, 86) mittels Dichtungen (50, 80) voneinander getrennt sind.

3. Brennstoffzelle nach Anspruch 1 oder 2,
**dadurch gekennzeichnet, daß** die zweiten Bereiche (60, 90) der Endplatten (56, 86) kreisringförmig ausgebildet sind.

4. Brennstoffzelle nach einem der Ansprüche 1 bis 3, **dadurch gekennzeichnet, daß** zumindest eine der Endplatten (56, 86) eine Durchbrechung (63, 93) aufweist, in die oder auf die Kontaktplatten (55, 85), die mit den Ausgangskontakten (78, 79) des Spannungswandlers (75) elektrisch leitend verbunden und gegen die Endplatten (56, 86) über elektr. Isolierungen (59, 89) elektrisch isoliert sind, ein- oder aufsetzbar sind.

5. Brennstoffzelle nach einem der Ansprüche 1 bis 4, **dadurch gekennzeichnet, daß** zwischen zwei Endplatten (56, 86) mehrere in Reihe geschaltete Brennstoffzellen zu einem Brennstoffzellenstapel zusammengefaßt sind, wobei innerhalb des Stapels zwischen den einzelnen Elektrolyt/Elektrodeneinheiten (70, 71) elektrisch leitende, bipolare Platten (57) angeordnet sind.

6. Brennstoffzelle nach einem der Ansprüche 4 bis 5, **dadurch gekennzeichnet, daß** mindestens zwei Kontaktplatten (55 oder 85) zweigeteilt ausgebildet, die beiden Teile der jeweilegen kontakplatte elektrisch gegeneinander isoliert und mit den verschieden gepolten Ausgangskontakten (78, 79) verbunden sind.

7. Brennstoffzelle nach einem der Ansprüche 4 bis 6, **dadurch gekennzeichnet, daß** die Eingangskontakte (76, 77) des Spannungswandlers (75) an den Durchbrechungen (63, 93) bandförmig umlaufend ausgebildet sind.

8. Brennstoffzelle nach einem der Ansprüche 4 bis 7, **dadurch gekennzeichnet, daß** die Ausgangskontakte (78, 79) des Spannungswandlers (75) durch die in den Endplatten (56, 86) ausgebildeten Durchbrechungen (63, 93) geführt sind.

9. Brennstoffzelle nach Ansprüche 4 bis 8, **dadurch gekennzeichnet, daß** die Durchbrechungen (63, 93) und/oder der erste Bereich (61, 91) der Endplatten (56, 86) außermittig oder randseitig angeordnet sind.

10. Brennstoffzelle nach Anspruch 9,
**dadurch gekennzeichnet, daß** die Kontaktplatten (55, 85) elektrisch isoliert in die Druchbrechungen eingesetzt sind.

11. Brennstoffzelle nach einem der Ansprüche 1 bis 10, **dadurch gekennzeichnet, daß** Zu- und Abführkanäle für Brennstoff und Oxidationsmittel zu der/den Elektrolyt/Elektrodeneinheit(en) (70, 71) geführt sind.

12. Brennstoffzelle nach einem der Ansprüche 4 bis 11, **dadurch gekennzeichnet, daß** zumindest die elektrisch leitenden Bereiche der Endplatten (56, 86) aus einem Metall, Kohlenstoff oder elektrisch leitendem Polymer bestehen.

13. Brennstoffzelle nach einem der Ansprüche 1 bis 12, **dadurch gekennzeichnet, daß** die Endplatten (56, 86) mit dem Spannungswandler (75) und/oder den Kontaktplatten (55, 85) form- und/oder kraftschlüssig miteinander verbunden sind.

14. Brennstoffzelle nach Anspruch 13,
**dadurch gekennzeichnet, daß** die elektr. Verbindungskontaks-Elemente (76, 77, 78, 79), die die elektrisch leitende Verbindung bilden, als Kontakt für den Spannungsabgriff dienen.

## Claims

1. Fuel cell with voltage converter, **characterised in that** the voltage converter (75) from which a converted voltage can be picked off is arranged via an input contact (76, 77) and an output contact (78, 79) between two electrically conducting end plates (56, 86) and in an electrically conducting manner connected to them in a respective first area (61, 91), and the first area (61, 91) is locally separated from a second area (60, 90) of the end plates (56, 86) comprising a direct electric link to the electrolyte/electrode unit (70, 71) and with contact to the chemical reactants, and connected in an electrically conducting manner.

2. Fuel cell according to Claim 1, **characterised in that** the two areas (61, 91) and (60, 90) of the end plates (56, 86) are separated from each other by means of seals (50, 80).

3. Fuel cell according to Claim 1 or 2, **characterised in that** the second areas (60, 90) of the end plates (56, 86) are of circular design.

4. Fuel cell according to one of Claims 1 to 3, **characterised in that** at least one of the end plates (56, 86) has a breakthrough (63, 93) into/onto which are insertible or placed contact plates (55, 85) which are in an electrically conducting manner connected to the output contacts (78, 79) of the voltage converter (75) and insulated against the end plates (56, 86) via electrical insulations (59, 89).

5. Fuel cell according to one of Claims 1 to 4, **characterised in that** between two end plates (56, 86) is arranged a plurality of fuel cells in series to form a fuel cell stack, and within the stack between the individual electrolyte/electrode units (70, 71) are arranged electrically conducting bipolar plates (57).

6. Fuel cell according to one of Claims 4 to 5, **characterised in that** at least two contact plates (55 or 85) are designed split in two and both parts of the respective contact plate are electrically insulated against each other and connected to differently poled output contacts (78, 79).

7. Fuel cell according to one of Claims 4 to 6, **characterised in that** the input contacts (76, 77) of the voltage converter (75) are designed to be peripherally bandshaped at the breakthroughs (63, 93).

8. Fuel cell according to one of Claims 4 to 7, **characterised in that** the output contacts (78, 79) of the voltage converter (75) are ducted through the breakthroughs (63, 93) arranged in the end plates (56, 86).

9. Fuel cell according to Claims 4 to 8, **characterised in that** the breakthroughs (63, 93) and/or the first area (61, 91) of the end plates (56, 86) are arranged eccentrically or edgesidedly.

10. Fuel cell according to Claim 9, **characterised in that** the contact plates (55, 85) are in an electrically insulated manner inserted into the breakthroughs.

11. Fuel cell according to one of Claims 1 to 10, **characterised in that** delivery and discharge channels for fuel and oxidants are ducted to the electrolyte/electrode unit(s) (70, 71).

12. Fuel cell according to one of Claims 4 to 11, **characterised in that** at least the electrically conductive areas of the end plates (56, 86) are made of a metal, carbon and electrically conducting polymer.

13. Fuel cell according to one of Claims 1 to 12, **characterised in that** the end plates (56, 86) are positively and/or in shape interconnected to the voltage converter (75) and/or the contact plates (55, 85).

14. Fuel cell according to Claim 13, **characterised in that** the electrical connecting contact elements (76, 77, 78, 79) which form the electrically conducting connections, serve as contact for the voltage pick off.

## Revendications

1. Pile à combustible comportant un convertisseur de tension, **caractérisée en ce que** le convertisseur de tension (75), sur lequel la tension convertie peut être prélevée, est disposé par l'intermédiaire d'un contact d'entrée (76, 77) et d'un contact de sortie (78, 79) entre deux plaques d'extrémité électriquement conductrices (56, 86) et est relié à ces plaques d'une manière électriquement conductrice dans une première zone respective (61, 91), que la première zone (61, 91) est séparée localement d'une seconde zone (60, 90) des plaques d'extrémité (56, 86) et y est reliée localement d'une manière électriquement conductrice, seconde zone qui possède une liaison électrique directe avec l'unité à électrolyte/ électrodes (70, 71) et est en contact avec les réactifs chimiques.

2. Pile à combustible selon la revendication 1, **caractérisée en ce que** les deux zones (61, 91) et (60, 90) des plaques d'extrémité (56, 86) sont séparées l'une de l'autre au moyen de garnitures d'étanchéité (50, 80).

3. Pile à combustible selon la revendication 1 ou 2, **caractérisée en ce que** les secondes zones (60, 90) des plaques d'extrémité (56, 86) sont agencées sous la forme d'anneaux circulaires.

4. Pile à combustible selon l'une des revendications 1 à 3, **caractérisée en ce qu'**au moins l'une des plaques d'extrémité (56, 86) possède un passage traversant (63, 93), dans ou sur lequel peuvent être insérées ou montées des plaques de contact (55, 85), qui sont reliées d'une manière électriquement conductrice aux contacts (78, 79) de sortie du convertisseur de tension (75) et sont isolées électriquement par l'intermédiaire d'isolants électriques (59, 89) par rapport aux plaques d'extrémité (56, 86).

5. Pile à combustible selon l'une des revendications 1 à 4, **caractérisée en ce qu'**entre deux plaques d'extrémité (56, 86) sont rassemblées plusieurs piles à combustible branchées en série servant à former un empilage de piles à combustible, des plaques bipolaires électriquement conductrices (57) étant disposées à l'intérieur de l'empilage entre les différentes unités à électrolyte/électrodes (70, 71).

6. Pile à combustible selon l'une des revendications 4 et 5, **caractérisée en ce qu'**au moins deux plaques de contact (55 ou 85) sont réalisées en étant divisées en deux, et que les deux parties de la plaque de contact respectives sont isolées électriquement l'une vis-à-vis de l'autre et sont reliées aux contacts de sortie (78, 79) polarisées différemment.

7. Pile à combustible selon l'une des revendications 4 à 6, **caractérisée en ce que** les contacts d'entrée (76, 77) du convertisseur de tension (75) sont formés de manière à entourer à la manière d'une bande les. passages traversants (63, 93).

8. Pile à combustible selon l'une des revendications 4 à 7, **caractérisée en ce que** les contacts de sortie (78, 79) du convertisseur de tension (75) traversent des passages traversants (63, 93) formés dans les plaques d'extrémité (56, 86).

9. Pile à combustible selon les revendications 4 à 8, **caractérisée en ce que** les passages traversants (63, 93) et/ou la première zone (61, 91) des plaques d'extrémité (56, 86) sont disposés d'une manière excentrée ou au niveau du bord.

10. Pile à combustible selon la revendication 9, **caractérisée en ce que** les plaques de contact (55, 85) sont insérées d'une manière isolée électriquement dans les passages traversants.

11. Pile à combustible selon l'une des revendications 1 à 10, **caractérisée en ce que** des canaux d'amenée et d'évacuation pour le combustible et l'agent d'oxydation sont guidés jusqu'à la ou aux unités à électrolyte/électrodes (70, 71).

12. Pile à combustible selon l'une des revendications 4 à 11, **caractérisée en ce qu'**au moins les zones électriquement conductrices des plaques d'extrémité (56, 86) sont réalisées en un métal, du carbone ou un polymère électriquement conducteur.

13. Pile à combustible selon l'une des revendications 1 à 12, **caractérisée en ce que** les plaques d'extrémité (56, 86) équipées du convertisseur de tension (75) et/ou des plaques de contact (55, 85) sont reliées entre elles selon une liaison par formes complémentaires et/ou selon une liaison de force.

14. Pile à combustible selon la revendication 13, **caractérisée en ce que** les éléments électriques de contact de liaison (76, 77, 78, 79), qui forment la liaison électriquement conductrice, sont utilisées en tant que contact pour le prélèvement d'une tension.
